# EUROPEAN PATENT SPECIFICATION

(11) **EP 3 199 377 B1**
(45) Date of publication and mention of the grant of the patent: **11.03.2020**
(21) Application number: 17151718.8
(22) Date of filing: 17.01.2017
(51) Int. Cl.: B60C 15/06, B60C 11/11

(54) **MOTORCYCLE TIRE FOR UNEVEN TERRAIN**
MOTORRADREIFEN FÜR UNEBENES GELÄNDE
PNEU DE MOTOCYCLETTE POUR TERRAIN ACCIDENTÉ

(30) Priority: 01.02.2016 JP 2016017076
(43) Date of publication of application: 02.08.2017
(73) Proprietor: Sumitomo Rubber Industries, Ltd., Kobe-shi, Hyogo-ken (JP)
(72) Inventor: YAMAMOTO, Naoki, Kobe-shi, Hyogo 651-0072 (JP); MIWA, Takuya, Kobe-shi, Hyogo 651-0072 (JP)
(74) Representative: Manitz Finsterwald Patent- und Rechtsanwaltspartnerschaft mbB

(56) References cited:
- EP-A1- 2 610 078
- EP-A1- 2 777 953
- JP-A- H02 225 102
- JP-A- H08 113 008

## Description

### BACKGROUND OF THE INVENTION

### Field of the Invention

The present invention relates to motorcycle tires for running in uneven terrain such as mountain forests and wilderness.

### Description of the Related Art

In uneven terrain, a road surface is uneven. A motorcycle running in uneven terrain repeats jumping and landing. At landing, a large load is applied to the tires. Each of the tires includes a flexible tread and sidewalls. By the tread and the sidewalls, impact at landing is absorbed.

The tire including the flexible tread and sidewalls easily deforms by an external force. The tire tends to have poor stiffness. With the motorcycle, the vehicle body is tilted during turning running. Each sidewall of the tire tends to have poor stiffness. The tire tends to have poor turning performance and tends to have poor steering stability.

JP 2007-326520 discloses a motorcycle tire for uneven terrain. The tire includes an inner reinforcing layer located between each bead portion and a carcass and an outer reinforcing layer located outward of each sidewall. The inner reinforcing layer and the outer reinforcing layer enhance the stiffness of a sidewall portion. In the tire, a reduction in the turning performance thereof is suppressed. In the tire, a reduction in the handling stability thereof is suppressed.

In the tire in JP 2007-326520, the outer reinforcing layer is disposed discontinuously with the bead portion. The bead portion comes into contact with a rim, and the tire is mounted onto the rim. The tire deforms from the bead portion that has come into contact with the rim. The tire, which includes the discontinuous outer reinforcing layer at each bead portion, is less likely to uniformly deform over its entirety. There is room for improvement in stability of the tire in turning and handling.

JP H02-225102 discloses a motorcycle tire in accordance with the preamble of claim 1.

An object of the present invention is to provide a motorcycle tire, for uneven terrain, which is excellent in impact absorbing performance and turning performance.

### SUMMARY OF THE INVENTION

A motorcycle tire for uneven terrain according to the present invention includes a tread, a pair of sidewalls, a pair of beads, and a carcass. The tread is located at a radially outer side and has a shape projecting outward. The tread includes a main body and a large number of blocks standing outward from a main body outer surface. Each block forms a contact surface that is brought into contact with a road surface. Each sidewall extends from an edge of the tread substantially inward in a radial direction. Each bead is located inward of the sidewall in an axial direction. The carcass extends on and between the one bead and the other bead and along inner sides of the tread and the sidewalls. The large number of blocks includes a shoulder block located at an axially outer side. Each bead includes a core and an apex extending from the core outward in the radial direction.

An axially outer boundary edge between the main body outer surface and the shoulder block is denoted by Ps and a point of intersection between the main body outer surface and a straight line that passes through an axially outer edge of a contact surface of the shoulder block and extends perpendicularly to the contact surface is denoted by Pe. In this case, a radially outer edge Pr of the apex is located between the boundary edge Ps and the point of intersection Pe in the radial direction.

A height of the outer edge Pr of the apex from a bead base line is denoted by H, a thickness from an outer surface of the tire to an inner cavity surface of the tire at a height of 0.75H from the bead base line is denoted by Wa, a thickness of the apex at the thickness Wa is denoted by Ta, a thickness from the outer surface of the tire to the inner cavity surface of the tire at a height of 0.5H is denoted by Wb, a thickness of the apex at the thickness Wb is denoted by Tb, a thickness from the outer surface of the tire to the inner cavity surface of the tire at a height of 0.2H is denoted by Wc, and a thickness of the apex at the thickness Wc is denoted by Tc.

According to claim 1, a ratio (Ta/Wa) of the thickness Ta relative to the thickness Wa is equal to or greater than 0.10 and equal to or less than 0.30, a ratio (Tb/Wb) of the thickness Tb relative to the thickness Wb is equal to or greater than 0.10 and equal to or less than 0.30, and a ratio (Tc/Wc) of the thickness Tc relative to the thickness Wc is equal to or greater than 0.10 and equal to or less than 0.35.

Preferably, the thickness Wa is equal to or greater than 6 mm and equal to or less than 11 mm. The thickness Wb is equal to or greater than 7 mm and equal to or less than 12 mm. The thickness Wc is equal to or greater than 3 mm and equal to or less than 8 mm.

Preferably, the tire is mounted to a front wheel of a two-wheeled vehicle.

Preferably, the thickness Wc is smaller than the thickness Wb.

Preferably, the thickness Wa is smaller than the thickness Wb.

Preferably, each of the thicknesses Ta, Tb, and Tc is equal to or greater than 0.4 mm and equal to or less than 3 mm.

In the tire according to the present invention, each sidewall can uniformly bend in addition to bending of the tread. The tire is excellent in impact absorbing performance. In addition, since each sidewall uniformly bends, the tire is excellent in turning performance.

### BRIEF DESCRIPTION OF THE DRAWINGS

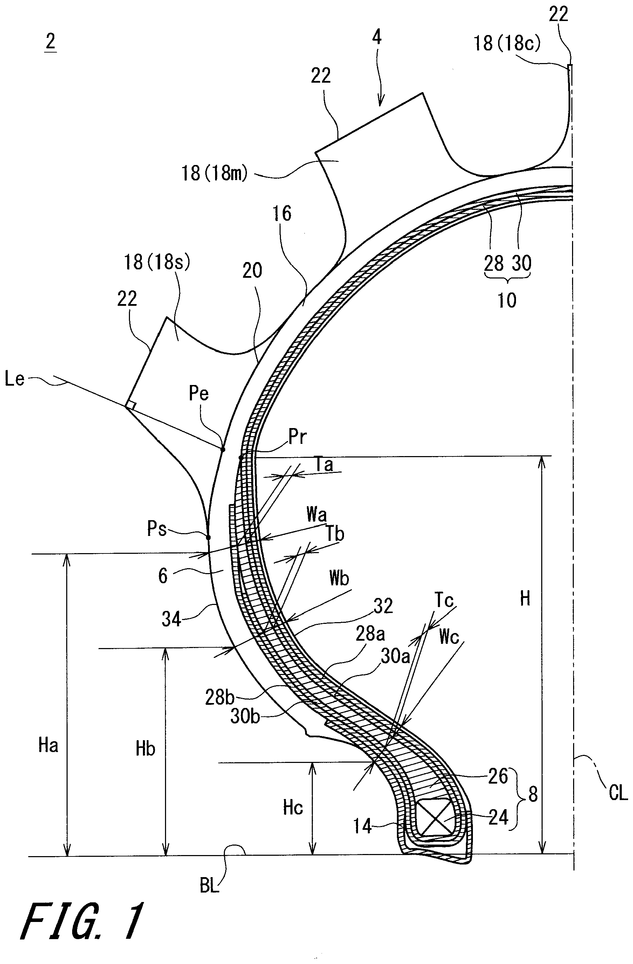

FIG. 1 is a cross-sectional view of a portion of a motorcycle tire for uneven terrain according to an embodiment of the present invention.

### DESCRIPTION OF THE PREFERRED EMBODIMENTS

The following will describe in detail the present invention based on preferred embodiments with appropriate reference to the drawings.

FIG. 1 shows a pneumatic tire 2. The tire 2 is mounted to a motorcycle for uneven terrain. The motorcycle for uneven terrain is a type of a two-wheeled vehicle. In FIG. 1, the up-down direction is the radial direction of the tire 2, the right-left direction is the axial direction of the tire 2, and the direction perpendicular to the surface of the sheet is the circumferential direction of the tire 2. In FIG. 1, an alternate long and short dash line CL represents the equator plane of the tire 2. A straight line BL represents a bead base line. The bead base line BL is a line that defines the rim diameter of a normal rim onto which the tire 2 is mounted. The bead base line BL extends in the axial direction. The shape of the tire 2 is symmetrical about the equator plane CL except for a block pattern.

The tire 2 includes a tread 4, sidewalls 6, beads 8, a carcass 10, and chafers 14.

The tread 4 is located at the radially outer side of the tire 2 and has a shape projecting outward. The tread 4 includes a main body 16 and a large number of blocks 18. The main body 16 is located outward of the carcass 10 in the radial direction and extends along the carcass 10. The main body 16 has a main body outer surface 20 facing outward in the radial direction. The blocks 18 stand outward from the main body outer surface 20. These blocks 18 form contact surfaces 22 that oppose and come into contact with a road surface. The contact surfaces 22 of these blocks 18 form a tread surface of the tire 2.

The tread 4 includes a center block 18c, a middle block 18m, and a shoulder block 18s. The center block 18c is located at the center in the axial direction. The middle block 18m is located outward of the center block 18c in the axial direction. The shoulder block 18s is located outward of the middle block 18m in the axial direction. By these blocks 18, a block pattern is formed in the tread 4.

In the tire 2, a half width of a tread-developed width is divided into three equal segments to define a center region, a middle region, and a shoulder region. The center block 18c is located in the center region at the center in the axial direction. The shoulder block 18s is located in the shoulder region at the outer side in the axial direction. The middle block 18m is located in the middle region located between the center region and the shoulder region in the axial direction.

The center block 18c extends beyond the equator plane CL. The center block 18c does not necessarily need to extend beyond the equator plane CL. In addition, as shown in FIG. 1, the axially central position of the center block 18c may be displaced in the axial direction relative to the equator plane CL. The axially central position of the center block 18c may be located on the equator plane CL.

The middle block 18m is located between the center block 18c and the shoulder block 18s in the axial direction. A plurality of middle blocks 18m may be aligned in the axial direction between the center block 18c and the shoulder block 18s.

The shoulder block 18s is not limited to the block located at the axially outermost side in the tire 2. The shoulder block 18s only needs to be a block located at the axially outermost side in the tire 2 in a cross-section that is perpendicular to the circumferential direction and includes the shoulder block 18s.

Each sidewall 6 extends from the edge of the tread 4 substantially inward in the radial direction. The sidewall 6 is formed from a crosslinked rubber that is excellent in vibration absorbing performance, cut resistance, and weather resistance. The sidewall 6 prevents damage of the carcass 10.

Each bead 8 is located inward of the sidewall 6 in the axial direction. The bead 8 includes a core 24 and an apex 26 extending from the core 24 outward in the radial direction. The core 24 has a ring shape and includes a non-stretchable wound wire. A typical material of the wire is steel.

The apex 26 is tapered outward in the radial direction. The apex 26 extends along the carcass 10. A radially outer edge Pr of the apex 26 is located inward of the shoulder block 18s. The apex 26 has a shape tapered toward the outer edge Pr. The apex 26 is formed from a highly hard crosslinked rubber.

A hardness of the apex 26 is preferably equal to or greater than 55 and further preferably equal to or greater than 60. On the other hand, the hardness is preferably equal to or less than 80 and further preferably equal to or less than 70. The hardness is measured according to the standard of "JIS K6253" with a type A durometer. The hardness is measured by pressing the durometer against the cross-section shown in FIG. 1. The measurement is performed at 23°C.

The carcass 10 includes a first ply 28 and a second ply 30. The first ply 28 and the second ply 30 extend on and between the beads 8 at both sides and along the tread 4 and the sidewalls 6. The first ply 28 is turned up around each core 24 from the inner side toward the outer side in the axial direction. Because of this turning-up, a main portion 28a and turned-up portions 28b are formed in the first ply 28. The second ply 30 is turned up around each core 24 from the inner side toward the outer side in the axial direction. Because of this turning-up, a main portion 30a and turned-up portions 30b are formed in the second ply 30. An edge of each turned-up portion 28b is located outward of an edge of the turned-up portion 30b in the radial direction.

Each of the first ply 28 and the second ply 30 includes a large number of cords aligned with each other, and a topping rubber. Each cord extends so as to be tilted relative to the equator plane CL. The carcass 10 has a bias structure. The absolute value of the angle of each cord relative to the equator plane CL is 25° to 40°. The cords are formed from an organic fiber. Examples of preferable organic fibers include polyester fibers, nylon fibers, rayon fibers, polyethylene naphthalate fibers, and aramid fibers. From the standpoint that high flexibility is obtained, polyester fibers and nylon fibers are preferable as the organic fiber.

The tire 2 is of a tube type. Here, the inner surface of the tire 2 is referred to as an inner cavity surface 32. In the tire 2, a tube is put inside the inner cavity surface 32. The tube is filled with air. The tire 2 may be a tubeless tire. The tubeless tire includes an inner liner. The inner liner is joined to the inner circumferential surface of the carcass 10. The inner liner is formed from a crosslinked rubber. A rubber that is excellent in air permeability is used for the inner liner. The inner liner serves to maintain the internal pressure of the tire. In the tubeless tire, the inner liner forms the inner cavity surface 32.

Each chafer 14 is located in the vicinity of the bead 8. When the tire 2 is mounted onto a rim, the chafer 14 comes into contact with the rim. Because of this contact, the vicinity of the bead 8 is protected. The chafer 14 includes a fabric and a rubber with which the fabric is impregnated.

In the tread 4 of the tire 2, the main body outer surface 20 and the outer surface of each block 18 form an outer surface of the tire 2 which outer surface faces outward in the radial direction. The axially outer surface of each sidewall 6 and the axially outer surface of each chafer 14 form an outer surface 34 of the tire 2 which outer surface 34 faces outward in the axial direction.

The tire 2 does not include a belt. In the tire 2, at the equator plane CL, the carcass 10 and the tread 4 are laminated in the radial direction. In the tire 2, at the equator plane CL, in addition to the carcass 10, a member including cords such as a belt is not laminated.

The tire 2 may include a belt. The belt is located inward of the tread 4 in the radial direction. The belt is located outward of the carcass 10 in the radial direction. The belt extends in the axial direction from the inner side of the one shoulder block 18s to the inner side of the other shoulder block 18s. The belt includes a cord and a topping rubber. The cord extends so as to be tilted relative to the equator plane CL. The absolute value of the angle of the cord relative to the equator plane CL is, for example, equal to or greater than 15° and equal to or less than 30°. The cord is formed from an organic fiber. Examples of preferable organic fibers include nylon fibers, polyester fibers, rayon fibers, polyethylene naphthalate fibers, and aramid fibers. The belt reinforces the carcass 10.

In FIG. 1, a point Ps represents a boundary edge between the main body outer surface 20 and the shoulder block 18s. The boundary edge Ps is an edge at which the shoulder block 18s stands from the main body outer surface 20. The boundary edge Ps is located at the radially innermost side in the shoulder block 18s. A straight line Le represents a straight line that passes through the axially outer edge of the contact surface 22 of the shoulder block 18s and extends perpendicularly to the contact surface 22. A point Pe represents a point of intersection between the straight line Le and the main body outer surface 20. The point of intersection Pe is obtained as a point of intersection between the straight line Le and the main body outer surface 20 on which it is assumed that the shoulder block 18s is not formed.

A double-headed arrow H represents the height of the outer edge Pr of the apex 26. A double-headed arrow Ha represents a height that is 0.75 times of the height H. A double-headed arrow Hb represents a height that is 0.5 times of the height H. The double-headed arrow Hc represents a height that is 0.2 times of the height H. Each of the heights H, Ha, Hb, and Hc is measured as a distance in a straight line in the radial direction from the bead base line BL.

A double-headed arrow Wa represents the thickness of the tire 2 at the outer surface 34 at the height Ha. A double-headed arrow Wb represents the thickness of the tire 2 at the outer surface 34 at the height Hb. A double-headed arrow Wc represents the thickness of the tire 2 at the outer surface 34 at the height Hc. Each of the thicknesses Wa, Wb, and Wc is measured as a thickness from the outer surface 34 to the inner cavity surface 32. Each of the thicknesses Wa, Wb, and Wc is measured as a distance in a straight line in the direction perpendicular to the outer surface 34.

A double-headed arrow Ta represents the thickness of the apex 26 at the position of the thickness Wa of the tire 2. A double-headed arrow Tb represents the thickness of the apex 26 at the position of the thickness Wb. A double-headed arrow Tc represents the thickness of the apex 26 at the position of the thickness Wc.

The carcass 10 has a bias structure. Thus, an increase in the stiffness of the tread 4 is suppressed. The tread 4 is excellent in flexibility. The tread 4 comes into contact with projections and the like of a road surface so as to envelope the projections and the like. The tread 4 is excellent in followability to irregularities of a road surface. The tire 2 is excellent in enveloping characteristics. The tread 4 is excellent in vibration or impact absorbing performance. Relatively small vibration or impact is absorbed mainly by the tread 4. Particularly, since the tire 2 does not include a belt, the tire 2 is excellent in vibration or impact absorbing performance.

In the tire 2, the apex 26 extends from the core 24 to the inner side of the shoulder block 18s. In the radial direction, the outer edge Pr of the apex 26 is located outward of the boundary edge Ps. In the axial direction, the outer edge Pr is located inward of the boundary edge Ps. Accordingly, the apex 26 reinforces the sidewall 6 over its entirety from the bead 8 to the tread 4 in the radial direction. Local deformation of the sidewall 6 is suppressed.

During turning running of the two-wheeled vehicle, the vehicle body is tilted. The tire 2 is tilted greatly. In the tire 2, a range from each position at which the tire 2 is in contact with the rim to the shoulder block 18s in the radial direction is reinforced. When the tire 2 is tilted greatly, a range from the radially outer side of the position at which the tire 2 is in contact with the rim to the shoulder block 18s deforms uniformly. Because of this reinforcement, the tire 2 allows for stable turning running. The apex 26 contributes to improvement of the turning performance of the tire 2.

Furthermore, when the vehicle body is tilted greatly, the entirety of the contact surface 22 of the shoulder block 18s comes into contact with the ground. The shoulder block 18s comes into contact with the ground at the axially outermost side. During turning running in which the vehicle body is tilted greatly, the shoulder block 18s receives a high load. Since the apex 26 extends to the axially inner side of the shoulder block 18s, the stiffness of the shoulder block 18s is enhanced. The tire 2 exerts a high grip force during turning running. The tire 2 contributes to improvement of the turning performance.

The tire 2 includes the apex 26 having a predetermined thickness. In the tire 2, a relatively great external force is absorbed by the sidewall 6 bending. Since the apex 26 is included, the entirety of the sidewall 6 bends. Because of the bending of the sidewall 6, relatively great vibration or impact is absorbed. Because of the bending of the sidewall 6, an external force that cannot be sufficiently absorbed by the tread 4 is absorbed.

In the tire 2, the blocks 18 (18s, 18m, 18c) form the contact surfaces 22 that are brought into contact with a road surface. The outer edge Pr of the apex 26 is located inward of the point of intersection Pe in the radial direction. The outer edge Pr of the apex 26 is located inward of the contact surfaces 22 in the radial direction. The apex 26 suppresses impairment of the flexibility of the tread 4. The apex 26 suppresses impairment of the vibration or impact absorbing performance of the tread 4.

The tire 2 in which the thickness of the apex 26 is large is excellent in turning performance and handling performance. From this standpoint, the ratio (Ta/Wa) of the thickness Ta relative to the thickness Wa is equal to or greater than 0.10 and preferably equal to or greater than 0.15. The ratio (Tb/Wb) of the thickness Tb relative to the thickness Wb is equal to or greater than 0.10 and preferably equal to or greater than 0.15. The ratio (Tc/Wc) of the thickness Tc relative to the thickness Wc is equal to or greater than 0.10 and preferably equal to or greater than 0.15.

On the other hand, the tire 2 in which the thickness of the apex 26 is excessively large impairs the cushioning performance of the sidewall 6. In the tire 2, the vibration or impact absorbing performance thereof is impaired. From this standpoint, the ratio (Ta/Wa) is equal to or less than 0.30 and preferably equal to or less than 0.25. The ratio (Tb/Wb) is equal to or less than 0.30 and preferably equal to or less than 0.25. The ratio (Tc/Wc) is equal to or less than 0.35 and preferably equal to or less than 0.30.

From the standpoint that turning running is stabilized, each of the thicknesses Ta, Tb, and Tc of the apex 26 is preferably equal to or greater than 0.4 mm, further preferably equal to or greater than 0.6 mm, and particularly preferably equal to or greater than 0.8 mm. On the other hand, in light of vibration or impact absorbing performance, each of the thicknesses Ta, Tb, and Tc of the apex 26 is preferably equal to or less than 3 mm, further preferably equal to or less than 2 mm, and particularly preferably equal to or less than 1.5 mm.

In the tire 2, the thickness of the apex 26 decreases toward the outer edge Pr. The thickness Tc is increased more easily than the thickness Ta and the thickness Tb. In addition, the stiffness of the vicinity of the core 24 is generally high. In the tire 2, the thickness Wc is smaller than the thickness Wa and the thickness Wb. Thus, also at the position of the thickness Wc, bending occurs due to an external force, similarly at the position of the thickness Wa and the position of the thickness Wb. By the thickness Wc being decreased, the entirety of the sidewall 6 can uniformly bend. The uniform bending of the sidewall 6 contributes to stabilization of the turning performance and the handling performance.

The shoulder block 18s is located outward of the sidewall 6 in the radial direction. In the vicinity of the shoulder block 18s, bending of the sidewall 6 is suppressed. In the tire 2, the thickness Wa is smaller than the thickness Wb. Thus, also at the position of the thickness Wa, bending occurs due to an external force, similarly at the position of the thickness Wb. By the thickness Wa being decreased, the entirety of the sidewall 6 can uniformly bend. The uniform bending of the sidewall 6 contributes to stabilization of the turning performance and the handling performance.

The thickness of the apex 26 may be gradually decreased mainly between the boundary edge Ps and the outer edge Pr in the radial direction. In this case, the thickness Ta and the thickness Tb may be equal to each other. Furthermore, the thickness Ta and the thickness Tc may be equal to each other. As described above, in the vicinity of the shoulder block 18s, bending of the sidewall 6 is suppressed. The gradual decrease in the thickness of the apex 26 between the boundary edge Ps and the outer edge Pr can contribute to uniform bending from the sidewall 6 to the shoulder block 18.

The tire 2 having large thicknesses Wa, Wb, and Wc is excellent in turning performance and handling performance. From this standpoint, the thickness Wa is preferably equal to or greater than 6 mm and further preferably equal to or greater than 7 mm. The thickness Wb is preferably equal to or greater than 7 mm and further preferably equal to or greater than 8 mm. The thickness Wc is preferably equal to or greater than 3 mm, further preferably equal to or greater than 4 mm, and particularly preferably equal to or greater than 5 mm.

On the other hand, the tire 2 having excessively large thicknesses Wa, Wb, and Wc impairs the cushioning performance of the sidewall 6. From this standpoint, the thickness Wa is preferably equal to or less than 11 mm and further preferably equal to or less than 9 mm. The thickness Wb is preferably equal to or less than 12 mm and further preferably equal to or less than 10 mm. The thickness Wc is preferably equal to or less than 8 mm and further preferably equal to or less than 7 mm.

In the tire 2, the sidewall 6 is reinforced by the apex 26. In the tire 2, it is not necessary to provide a special reinforcing layer. The tire 2 has a general configuration. For the tire 2, an increase in manufacturing process steps is suppressed.

The tire 2 is excellent in performance of absorbing small impact or vibration and also great impact or vibration. When the tire 2 is mounted to the front wheel of a two-wheeled vehicle, impact or vibration transmitted to the handle is reduced. The tire 2 is excellent also in handling performance. When the tire 2 is mounted to the front wheel, the handling performance of the two-wheeled vehicle can be improved.

In the present invention, the dimensions and angles of each component of the tire 2 are measured in a state where the tire 2 is mounted on a normal rim and inflated with air to a normal internal pressure, unless otherwise specified. During the measurement, no load is applied to the tire 2. In the present specification, the normal rim means a rim specified in a standard on which the tire 2 is based. The normal internal pressure means an internal pressure specified in the standard on which the tire 2 is based.

### EXAMPLES

The following will show effects of the present invention by means of examples, but the present invention should not be construed in a limited manner based on the description of these examples.

### [Example 1]

A tire having the structure shown in FIG. 1 was obtained. The thicknesses Wa, Wb, and Wc of the tire, the ratio (Ta/Wa), the ratio (Tb/Wb), and the ratio (Tc/Wc) were as shown in Table 1. In Table 1, "appropriate" at outer edge Pr position represents that the outer edge Pr of the apex is located between the boundary edge Ps and the point of intersection Pe in the radial direction. In addition, in Table 1, "low" at outer edge Pr position represents that the outer edge Pr is located inward of the boundary edge Ps in the radial direction. Also, "high" at outer edge Pr position represents that the outer edge Pr is located outward of the point of intersection Pe in the radial direction.

### [Comparative Example 1]

A commercially available tire was prepared. The tire includes normal apexes. The outer edge Pr of each apex was located at the midpoint between the boundary edge Ps and the bead base line in the radial direction. The thicknesses Wa, Wb, and Wc of the tire are not thicknesses measured at positions based on the apex of the tire and are thicknesses measured at height positions of the tire of Example 1. In each of the cells for ratio (Ta/Wa), ratio (Tb/Wb), and ratio (Tc/Wc), "-" represents that the ratio was not measured. In the tire, the apex was not located at the positions of the thickness Wa and the thickness Wb in Example 1, but was located at the position of the thickness Wc. The other basic structure was the same as in Example 1.

### [Comparative Examples 2 and 3]

Tires were obtained in the same manner as in Example 1, except the outer edge Pr of the apex was changed in the radial direction. In Comparative Example 2, the outer edge Pr was located inward, in the radial direction, of the axially outer boundary edge Ps with the shoulder block. In Comparative Example 3, the outer edge Pr was located outward, in the radial direction, of the point of intersection Pe between the main body outer surface and a straight line that passes through the axially outer edge of the contact surface of the shoulder block and extends perpendicularly to the contact surface.

### [Examples 2 to 7]

Tires were obtained in the same manner as in Example 1, except the thicknesses Wa, Wb, and Wc of each tire, the ratio (Ta/Wa), the ratio (Tb/Wb), and the ratio (Tc/Wc) were as shown in Table 2.

### [Examples 8 to 14]

Tires were obtained in the same manner as in Example 1, except the thicknesses Wa, Wb, and Wc of each tire, the ratio (Ta/Wa), the ratio (Tb/Wb), and the ratio (Tc/Wc) were as shown in Table 3.

### [Turning Performance]

A motocross bike that is a 450-cc two-wheeled vehicle was prepared. Each tire was mounted to the front wheel of the motocross bike. The tire was inflated with air to an internal pressure of 80 kPa. The motocross bike was caused to run on a motocross course, and a professional rider made a sensory evaluation for turning performance. The results of the evaluation are shown in Tables 1 to 3. In the evaluation, 10 points is defined as a maximum score, and a higher numerical value indicates a better result.

### [Impact Absorbing Performance]

Together with turning performance, a sensory evaluation was made for impact absorbing performance. The results of the evaluation are shown in Tables 1 to 3. In the evaluation, 10 points is defined as a maximum score, and a higher numerical value indicates a better result.

**Table 1 Results of Evaluation**

| | Comp. ex.1 | Comp. ex.2 | Ex.1 | Comp. ex.3 |
|---|---|---|---|---|
| Outer edge Pr position | Low | Low | Appropriate | High |
| Thickness Wa (mm) | 6 | 7.5 | 7.5 | 7.5 |
| Thickness Wb (mm) | 10 | 10 | 10 | 10 |
| Thickness Wc (mm) | 10 | 6 | 6 | 6 |
| Ratio Ta/Wa | - | 0.2 | 0.2 | 0.2 |
| Ratio Tb/Wb | - | 0.15 | 0.15 | 0.15 |
| Ratio Tc/Wc | - | 0.25 | 0.25 | 0.25 |
| Turning performance | 10 | 6 | 10 | 10 |
| Impact absorbing performance | 4 | 7 | 10 | 6 |

**Table 2 Results of Evaluation**

| | Ex.7* | Ex.5* | Ex.3* | Ex.2* | Ex.4* | Ex.6* |
|---|---|---|---|---|---|---|
| Outer edge Pr position | Appropriate | Appropriate | Appropriate | Appropriate | Appropriate | Appropriate |
| Thickness Wa (mm) | 7.5 | 7.5 | 7.5 | 7.5 | 7.5 | 7.5 |
| Thickness Wb (mm) | 10 | 10 | 10 | 10 | 10 | 10 |
| Thickness Wc (mm) | 6 | 6 | 6 | 6 | 6 | 6 |
| Ratio Ta/Wa | 0.08 | 0.08 | 0.08 | 0.2 | 0.2 | 0.32 |
| Ratio Tb/Wb | 0.08 | 0.08 | 0.15 | 0.15 | 0.32 | 0.32 |
| Ratio Tc/Wc | 0.12 | 0.25 | 0.25 | 0.4 | 0.4 | 0.4 |
| Turning performance | 7 | 7 | 8 | 9 | 10 | 10 |
| Impact absorbing performance | 7 | 7 | 9 | 8 | 7 | 7 |

| | | | | | | |
|---|---|---|---|---|---|---|
| * not according to claim 1 | | | | | | |

**Table 3 Results of Evaluation**

| | Ex.8 | Ex.9 | Ex.10 | Ex.11 | Ex.12 | Ex.13 | Ex.14 |
|---|---|---|---|---|---|---|---|
| Outer edge Pr position | Appropriate | Appropriate | Appropriate | Appropriate | Appropriate | Appropriate | Appropriate |
| Thickness Wa (mm) | 6 | 5 | 7.5 | 7.5 | 7.5 | 10 | 12 |
| Thickness Wb (mm) | 5 | 7 | 5 | 10 | 15 | 15 | 15 |
| Thickness Wc (mm) | 3 | 3 | 5 | 5 | 10 | 10 | 10 |
| Ratio Ta/Wa | 0.2 | 0.2 | 0.2 | 0.2 | 0.2 | 0.2 | 0.2 |
| Ratio Tb/Wb | 0.2 | 0.2 | 0.2 | 0.15 | 0.15 | 0.15 | 0.2 |
| Ratio Tc/Wc | 0.25 | 0.25 | 0.25 | 0.25 | 0.25 | 0.25 | 0.25 |
| Turning performance | 7 | 7 | 7 | 9 | 10 | 10 | 10 |
| Impact absorbing performance | 7 | 7 | 7 | 8 | 8 | 7 | 7 |

As shown in Tables 1 to 3, the tires of the Examples are excellent in both turning performance and impact absorbing performance. The evaluation is higher in the tires of the examples than in the tires of the comparative examples. From the results of evaluation, advantages of the present invention are clear.

The pneumatic tire described above is suitable as a motorcycle tire for uneven terrain including blocks in a tread.

The above descriptions are merely illustrative examples, and various modifications can be made without departing from the scope of the present invention as defined in the appended claims.

## Claims

1. A motorcycle tire (2) for uneven terrain, comprising:
a tread (4);
a pair of sidewalls (6);
a pair of beads (8); and
a carcass (10), wherein
the tread (4) is located at a radially outer side, has a shape projecting outward, and includes a main body (16) and a large number of blocks (18) standing outward from a main body outer surface (20), and each block (18) forms a contact surface (22) that is brought into contact with a road surface,
each sidewall (6) extends from an edge of the tread (4) substantially inward in a radial direction,
each bead (8) is located inward of the sidewall (6) in an axial direction,
the carcass (10) extends on and between the one bead (8) and the other bead (8) and along inner sides of the tread (4) and the sidewalls (6),
the large number of blocks (18) includes a shoulder block (18s) located at an axially outer side,
each bead (8) includes a core (24) and an apex (26) extending from the core (24) outward in the radial direction, and
when an axially outer boundary edge between the main body outer surface (20) and the shoulder block (18s) is denoted by Ps and a point of intersection between the main body outer surface (20) and a straight line (Le) that passes through an axially outer edge of the contact surface of the shoulder block (18s) and extends perpendicularly to the contact surface is denoted by Pe, a radially outer edge Pr of the apex (26) is located between the boundary edge Ps and the point of intersection Pe in the radial direction
wherein a height of the outer edge Pr of the apex (26) from a bead base line (BL) is denoted by H, a thickness from an outer surface of the tire (2) to an inner cavity surface (32) of the tire (2) at a height of 0.75H from the bead base line (BL) is denoted by Wa, a thickness of the apex (26) at the thickness Wa is denoted by Ta, a thickness from the outer surface of the tire (2) to the inner cavity surface (32) of the tire (2) at a height of 0.5H is denoted by Wb, a thickness of the apex (26) at the thickness Wb is denoted by Tb, a thickness from the outer surface of the tire (2) to the inner cavity surface (32) of the tire (2) at a height of 0.2H is denoted by Wc, and a thickness of the apex (26) at the thickness Wc is denoted by Tc,
**characterized in that**
a ratio of the thickness Ta relative to the thickness Wa is equal to or greater than 0.10 and equal to or less than 0.30, a ratio of the thickness Tb relative to the thickness Wb is equal to or greater than 0.10 and equal to or less than 0.30, and a ratio of the thickness Tc relative to the thickness Wc is equal to or greater than 0.10 and equal to or less than 0.35.

2. The tire (2) according to claim 1, wherein the thickness Wa is equal to or greater than 6 mm and equal to or less than 11 mm, the thickness Wb is equal to or greater than 7 mm and equal to or less than 12 mm, and the thickness Wc is equal to or greater than 3 mm and equal to or less than 8 mm.

3. The tire (2) according to claim 1 or 2, wherein the thickness Wc is smaller than the thickness Wb.

4. The tire (2) according to any one of claims 1 to 3, wherein the thickness Wa is smaller than the thickness Wb.

5. The tire (2) according to any one of claims 1 to 4, wherein each of the thicknesses Ta, Tb, and Tc is equal to or greater than 0.4 mm and equal to or less than 3 mm.

6. A two-wheeled vehicle comprising a front wheel to which a tire (2) according to any one of the preceding claims is mounted.

## Patentansprüche

1. Motorradreifen (2) für unwegsames Gelände, umfassend:
eine Lauffläche (4);
ein Paar Seitenwände (6);
ein Paar Wülste (8); und
eine Karkasse (10), wobei
die Lauffläche (4) an einer radial äußeren Seite angeordnet ist, eine nach außen vorstehende Form aufweist und einen Hauptkörper (16) und eine große Anzahl von Blöcken (18) umfasst, die von einer Hauptkörperaußenfläche (20) nach außen abstehen, und jeder Block (18) eine Kontaktfläche (22) bildet, die mit einer Straßenoberfläche in Kontakt gebracht wird,
jede Seitenwand (6) sich von einer Kante der Lauffläche (4) in einer radialen Richtung im Wesentlichen nach innen erstreckt,
jeder Wulst (8) in einer axialen Richtung innen von der Seitenwand (6) angeordnet ist,
die Karkasse (10) sich auf und zwischen dem einen Wulst (8) und dem anderen Wulst (8) und entlang von Innenseiten der Lauffläche (4) und der Seitenwände (6) erstreckt,
die große Anzahl von Blöcken (18) einen Schulterblock (18s) umfasst, der sich an einer axial äußeren Seite befindet,
jeder Wulst (8) einen Kern (24) und einen Kernreiter (26) umfasst, der sich von dem Kern (24) in einer radialen Richtung nach außen erstreckt, und
wenn eine axial äußere Begrenzungskante zwischen der Hauptkörperaußenfläche (20) und dem Schulterblock (18s) mit Ps bezeichnet wird und ein Schnittpunkt zwischen der Hauptkörperaußenfläche (20) und einer geraden Linie (Le), die durch eine axial äußere Kante der Kontaktfläche des Schulterblocks (18s) verläuft und sich senkrecht zur Kontaktfläche erstreckt, mit Pe bezeichnet wird, eine radial äußere Kante Pr des Kernreiters (26) in der radialen Richtung zwischen der Begrenzungskante Ps und dem Schnittpunkt Pe angeordnet ist,
wobei eine Höhe der Außenkante Pr des Kernreiters (26) von einer Wulstbasislinie (BL) mit H bezeichnet wird, eine Dicke von einer Außenfläche des Reifens (2) zu einer Innenhohlraumfläche (32) des Reifens (2) in einer Höhe von 0,75H von der Wulstbasislinie (BL) mit Wa bezeichnet wird, eine Dicke des Kernreiters (26) bei der Dicke Wa mit Ta bezeichnet wird, eine Dicke von der Außenfläche des Reifens (2) zu der Innenhohlraumfläche (32) des Reifens (2) in einer Höhe von 0,5H mit Wb bezeichnet wird, eine Dicke des Kernreiters (26) bei der Dicke Wb mit Tb bezeichnet wird, eine Dicke von der Außenfläche des Reifens (2) zu der Innenhohlraumfläche (32) des Reifens (2) in einer Höhe von 0,2H mit Wc bezeichnet wird, und eine Dicke des Kernreiters (26) bei der Dicke Wc mit Tc bezeichnet wird,
**dadurch gekennzeichnet, dass**
ein Verhältnis der Dicke Ta relativ zu der Dicke Wa gleich oder größer als 0,10 und gleich oder kleiner als 0,30 ist, ein Verhältnis der Dicke Tb relativ zu der Dicke Wb gleich oder größer als 0,10 und gleich oder kleiner als 0,30 ist, und ein Verhältnis der Dicke Tc relativ zu der Dicke Wc gleich oder größer als 0,10 und gleich oder kleiner als 0,35 ist.

2. Reifen (2) nach Anspruch 1, wobei die Dicke Wa gleich oder größer als 6 mm und gleich oder kleiner als 11 mm ist, die Dicke Wb gleich oder größer als 7 mm und gleich oder kleiner als 12 mm ist, und die Dicke Wc gleich oder größer als 3 mm und gleich oder kleiner als 8 mm ist.

3. Reifen (2) nach Anspruch 1 oder 2, wobei die Dicke Wc kleiner als die Dicke Wb ist.

4. Reifen (2) nach einem der Ansprüche 1 bis 3, wobei die Dicke Wa kleiner als die Dicke Wb ist.

5. Reifen (2) nach einem der Ansprüche 1 bis 4, wobei eine jede der Dicken Ta, Tb und Tc gleich oder größer als 0,4 mm und gleich oder kleiner als 3 mm ist.

6. Zweiradfahrzeug mit einem Vorderrad, an dem ein Reifen (2) nach einem der vorstehenden Ansprüche montiert ist.

## Revendications

1. Pneumatique de motocyclette (2) pour terrain accidenté, comprenant :
une bande de roulement (4) ;
une paire de parois latérales (6) ;
une paire de talons (8) ; et
une carcasse (10), dans lequel
la bande de roulement (4) est située au niveau d'un côté radialement extérieur, elle a une forme qui se projette vers l'extérieur, et elle inclut un corps principal (16) et un grand nombre de blocs (18) dressés vers l'extérieur depuis une surface extérieure (20) du corps principal, et chaque bloc (18) forme une surface de contact (22) qui est amenée en contact avec une surface routière,
chaque paroi latérale (6) s'étend depuis une bordure de la bande de roulement (4) sensiblement vers l'intérieur dans une direction radiale,
chaque talon (8) est situé vers l'intérieur de la paroi latérale (6) dans une direction axiale,
la carcasse (10) s'étend par-dessus et entre l'un des talons (8) et l'autre talon (8) et le long des côtés intérieurs de la bande de roulement (4) et des parois latérales (6),
le grand nombre de blocs (18) inclut un bloc d'épaulement (18s) situé au niveau d'un côté axialement extérieur,
chaque talon (8) inclut une âme (24) et un sommet (26) s'étendant depuis l'âme (24) vers l'extérieur dans la direction radiale, et
quand une bordure frontière axialement extérieure entre la surface extérieure (20) du corps principal et le bloc d'épaulement (18s) est désignée par Ps, et quand un point d'intersection entre la surface extérieure (20) du corps principal et une ligne droite (Le) qui passe à travers une bordure axialement extérieure de la surface de contact du bloc d'épaulement (18s) et qui s'étend perpendiculairement à la surface de contact est désigné par Pe, une bordure radialement extérieure Pr du sommet (26) est située entre la bordure frontière Ps et le point d'intersection Pe dans la direction radiale,
dans lequel une hauteur de la bordure extérieure Pr de sommet (26) depuis une ligne de base (BL) du talon est désignée par H, une épaisseur depuis une surface extérieure du pneumatique (2) jusqu'à une surface (32) de la cavité intérieure du pneumatique (2) à une hauteur égale à 0,75 H depuis la ligne de base (BL) du talon est désignée par Wa, une épaisseur du sommet (26) au niveau de l'épaisseur Wa est désignée par Ta, l'épaisseur depuis la surface extérieure du pneumatique (2) jusqu'à la surface (32) de la cavité intérieure du pneumatique (2) à une hauteur égale à 0,5H est désignée par Wb, une épaisseur du sommet (26) au niveau de l'épaisseur Wb est désignée par Tb, une épaisseur depuis la surface extérieure de pneumatique (2) jusqu'à la surface (32) de la cavité intérieure du pneumatique (2) à une hauteur 0,2H est désignée par Wc, et une épaisseur du sommet (26) au niveau de l'épaisseur Wc est désignée par Tc,
**caractérisé en ce que**
un rapport de l'épaisseur Ta par rapport à l'épaisseur Wa est égal ou supérieur à 0,10 et est égal ou inférieur à 0,30, un rapport de l'épaisseur Tb par rapport à l'épaisseur Wb est égal ou supérieur à 0,10 et est égal ou inférieur à 0,30, et un rapport de l'épaisseur Tc par rapport à l'épaisseur Wc est égal ou supérieur à 0,10 et est égal ou inférieur à 0,35.

2. Pneumatique (2) selon la revendication 1, dans lequel l'épaisseur Wa est égale ou supérieure à 6 mm et est égale ou inférieure à 11 mm, l'épaisseur Wb est égale ou supérieure à 7 mm et est égale ou inférieure à 12 mm, et l'épaisseur Wc est égale ou supérieure à 3 mm et est égale ou inférieure à 8 mm.

3. Pneumatique (2) selon la revendication 1 ou 2, dans lequel l'épaisseur Wc est inférieure à l'épaisseur Wb.

4. Pneumatique (2) selon l'une quelconque des revendications 1 à 3, dans lequel l'épaisseur Wa est inférieure à l'épaisseur Wb.

5. Pneumatique (2) selon l'une quelconque des revendications 1 à 4, dans lequel chacune des épaisseurs Ta, Tb, et Tc est égale ou supérieure à 0,4 mm et est égale ou inférieure à 3 mm.

6. Véhicule à deux roues comprenant une roue avant sur laquelle est monté un pneumatique (2) selon l'une quelconque des revendications précédentes.
